# EUROPEAN PATENT APPLICATION

(11) **EP 4 722 039 A1**
(43) Date of publication of application: **08.04.2026**
(21) Application number: 25204072.0
(22) Date of filing: 23.09.2025
(51) Int. Cl.: B60N 3/04

(54) **FLOOR MAT WITH CLOSED GROMMET**

(30) Priority: 01.10.2024 US 202418903671
(71) Applicant: Thermoflex Corporation, Waukegan, IL 60085 (US)
(72) Inventor: Price, Robert, Mettawa, 60048 (US); Price, Jacob, Waukegan, 60085 (US); Vogler, Michael, Deerfield, 60015 (US)
(74) Representative: IPAZ

(57) **Abstract**

A floor mat (22) for a vehicle having a floor, where the floor mat includes a mat body having a core (44), an upper surface (62) and an opposing lower surface. A grommet is attached to or integrally formed with the mat body and contained between the upper surface and the lower surface, where the grommet includes a body (26) having a wall (48) and a flange (38) extending outwardly from the wall. The wall has an outer surface (32) and an inner surface (34), where the inner surface defines a throughbore (36) with a closed top end.

## Description

### BACKGROUND

The present invention relates generally to floor mats used for protecting underlying finished, unfinished floors or carpeting, and more specifically to floor mats having grommets that are used in passenger vehicles.

It is common to provide protective floor mats on floors of passenger vehicles to protect the original equipment carpeting and underlying floor from wear, dirt and liquids, and also for providing an easily removable protected surface for those vehicles having uncarpeted flooring. To prevent the mats from interfering with vehicle operation and to releasably secure them in position, various fastening techniques have been employed. One conventional floor mat fastening scheme is to secure vertical posts in the vehicle floor, either before or after the original equipment carpeting has been installed. The posts often have an irregular shape such as an enlarged head and narrow neck, or another shape for releasably and lockingly engaging a complementary grommet. The grommets are typically provided in multiple pieces, and are assembled on the floor mat by sandwiching the mat body between grommet components and about an opening in the floor mat which accommodates the post in the floor.

Often the grommets define an opening that matingly and releasably engages the post, and in some cases includes a resilient or deformable portion for releasably locking the engagement between the post and grommet to more securely hold the floor mat in position in the vehicle. In other cases, the grommet opening has an irregular shape for releasably engaging a vertically-extending post formation.

The opening in the grommet typically extends through the grommet so that there is an exposed opening on the upper surface of the grommet, which is on the floor mat. The exposed opening allows liquids, dirt and other debris on the floor mat to flow through the opening and to the underlying carpeted floor or other surface of the vehicle, which can stain or damage the carpeted floor or corrode metal surfaces surrounding or below the carpeted floor.

Thus, there is a need for an improved vehicle floor mat grommet that has a closed top to help prevent liquids, dirt and other debris on the vehicle floor mat from reaching the underlying floor of the vehicle.

### SUMMARY

The above-listed needs are met or exceeded by the present floor mat with a closed grommet. To facilitate insert molding and to promote bonding with the mat material, which is preferably a thermoplastic material suitable for injection molding, such as, Thermoplastic Elastomer (TPE) or other known thermoplastic materials, the present grommet is provided with a grommet body defining a post engagement throughbore, and a flange extending radially from the body. The grommet is made of a plastic material having a melting point greater than that of the surrounding mat so that it can withstand the insert molding process. In addition, the grommet is made of a plastic that is chemically compatible with the mat material so that they will bond together during the molding process.

In an embodiment, a floor mat for a vehicle having a floor is provided, where the floor mat includes a mat body having a core, an upper surface and an opposing lower surface. A grommet is attached to or integrally formed with the mat body and contained between the upper surface and the lower surface, where the grommet includes a body having a wall and a flange extending outwardly from the wall. The wall has an outer surface and an inner surface, where the inner surface defines a throughbore with a closed top end.

In another embodiment, a grommet for a vehicle floor mat is provided and includes a body having a wall and a flange extending outwardly from the wall, the wall having an outer surface and an inner surface, the inner surface defining a throughbore with a closed top end.

### BRIEF DESCRIPTION OF THE DRAWINGS

Fig. 1 is a bottom perspective view of an embodiment of the present grommet;
Fig. 2 is a top view of the grommet of Fig. 1;
Fig. 3 is a bottom view of the grommet of Fig. 1;
Fig. 4 is a side view of the grommet of Fig. 1;
Fig. 5 is a cross-section view of the grommet taken along the line 5-5 of Fig. 2 and in the direction generally indicated;
Fig. 6 is a top view of a vehicle floor mat including additional embodiments of the present grommet;
Fig. 7 is a cross-section view of the floor mat and grommets taken along the line 7-7 of Fig. 6 and in the direction generally indicated;
Fig. 8A is an enlarged fragmentary cross-section view of the left grommet shown in Fig. 7; and
Fig. 8B is an enlarged fragmentary cross-section view of the right grommet shown in Fig. 7.
Fig. 9 is a schematic cross-section view of another embodiment of the grommet.

### DETAILED DESCRIPTION

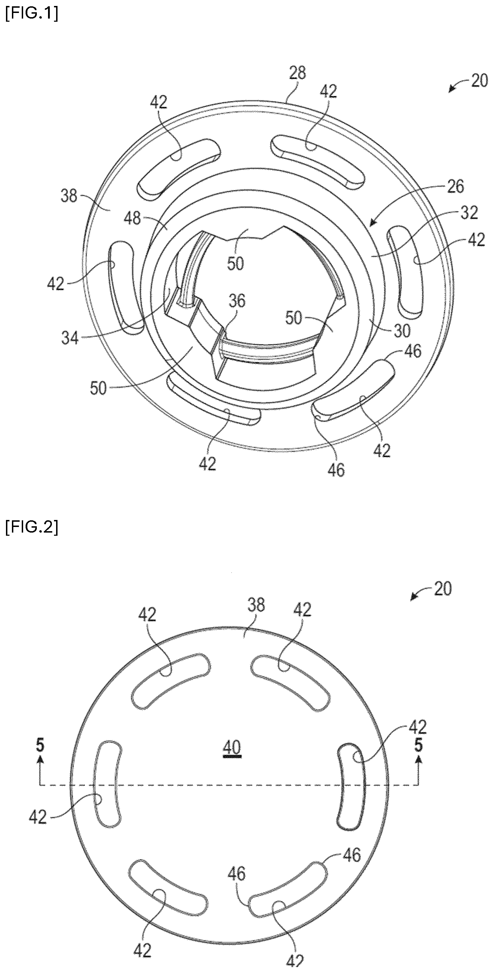

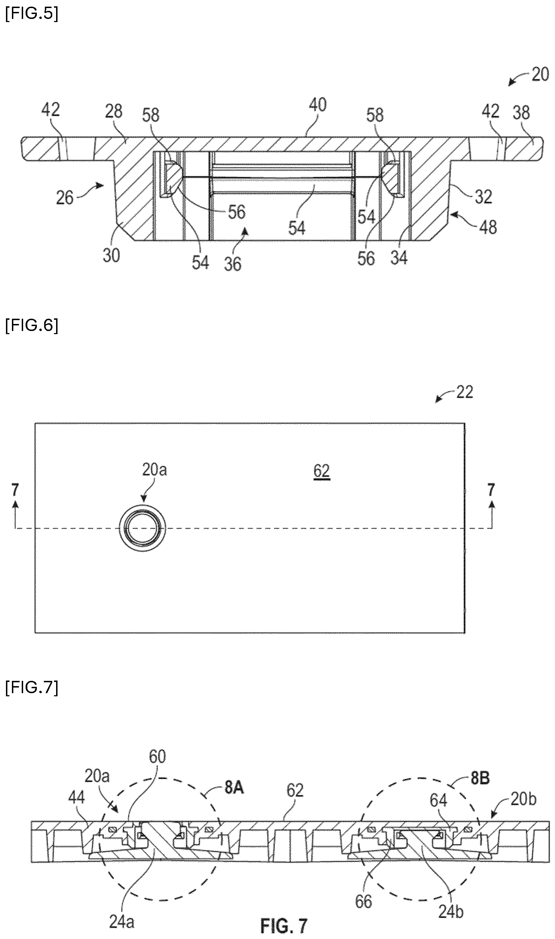

Referring now to Figs. 1-7, the present grommet is generally designated 20, and is constructed and arranged for installation in a vehicle floor mat such as the floor mat 22 shown in Fig. 6 having at least one post 24a or 24) (Fig. 7) secured thereto. The grommet 20 includes a body 26, which in the preferred embodiment is generally cylindrical, however other shapes are contemplated, including polygonal. The body 26 has a first, upper edge 28, a second, opposite, lower edge 30, an outer surface 32 and an inner surface 34 defining a post-engagement throughbore 36. A flange 38 extends radially outwardly from the body 26, and more specifically, from the outer surface 32 of the body. It is preferred that the flange 38 is at the upper edge 28 of the body so that the upper surface 40 of the body 26 is a continuous, flat surface. It should be appreciated that the upper surface of the body may be flat or have a curved shape or any suitable shape. Furthermore, the throughbore 36 has a closed top end such that the flange 38 does not have an opening in communication with the throughbore.

As shown in Fig. 2, the flange 38 includes at least one, and preferably a plurality of slots 42. The slots 42 are open from top to bottom on the flange 38, and allow molten plastic that forms the floor mat 22 (Fig. 6) to flow through. Once the plastic sets and hardens, the flange 38, and the grommet 20 as well, are securely embedded and integrated into the core of the floor mat. As such, the slots 42 enhance the fastening of the grommet 20 to the core 44 of the floor mat 22. As seen in Fig. 2, the slots 42 are preferably elongate in shape with radiused ends 46 generally forming an elongate oval shape, and are preferably arranged in end-to-end format on the flange 38, where portions of the flange 38 separate adjacent slots 42, i.e., the slots 42 are spaced from each other.

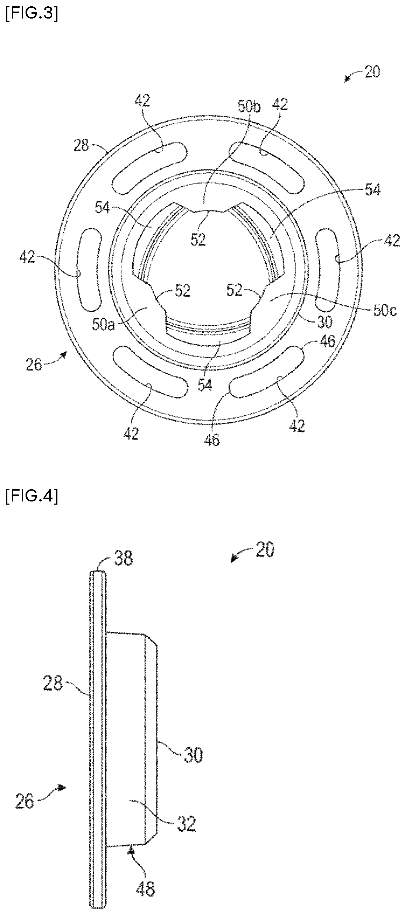

As shown in Figs. 1, 3 and 5, the grommet body 26 includes a wall 48 having a plurality of inwardly projecting blocks 50 that are spaced from each other along the inner surface 34 of the wall. In an embodiment, the wall 48 includes three inwardly projecting blocks 50a, 50b and 50c as shown in Fig. 3, but it is contemplated that the wall may include two or more of the inwardly projecting blocks. The blocks 50a, 50b and 50c each extend from the lower edge 30 to the top edge 28 of the body 26. In another embodiment, the blocks 50a, 50b and 50c extend from the lower edge 30 or the top edge 28 to a point between the lower edge and the top edge. As shown in Fig. 3, each of the blocks 50a, 50b and 50c includes a curved inner surface 52 that helps guide a floor post into the throughbore 36 of the grommet 20 when a floor mat is being secured to the floor of a vehicle.

In the illustrated embodiment, an elongated resilient rib 54 extends between each pair of adjacent blocks 50a, 50b and 50c. Each of the ribs 54 has an inclined guide surface 56 and a substantially flat upper surface 58. In operation, a top edge of a floor post is inserted into the throughbore 36 and slides along the inclined guide surfaces 56 of the ribs 54 and a portion of the floor post, such as a lip or shoulder, extends over the flat upper surfaces 58 of the ribs 54 to releasably, lockingly engage the post to the grommet 20. It should be appreciated that the body 26 may include two or more of the ribs 54. In another embodiment, an annular rib extends about the entire inner circumference of the inner surface of the wall 48 of the body. As seen in Figs. 3 and 4, the ribs 54 engage an underside of the post head for preventing inadvertent upward movement of the floor mat 22 relative to the post.

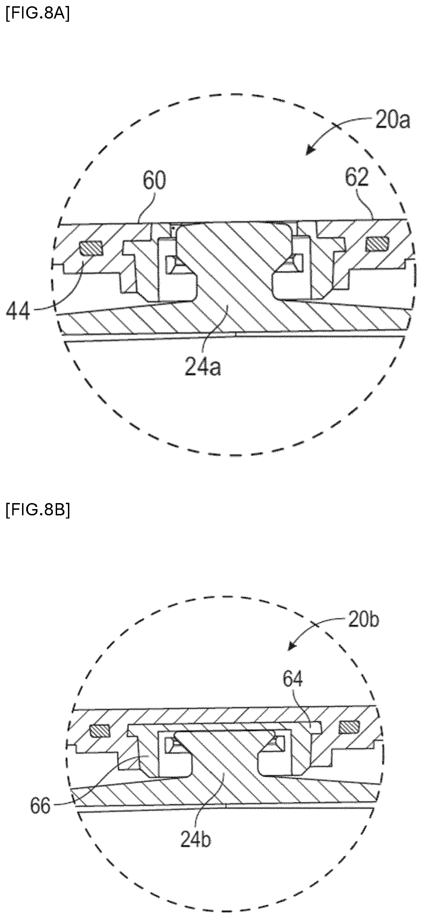

Referring to Figs. 6, 7, 8A and 8B, in an embodiment shown in Fig. 8A, grommet 20a is attached to or molded with the floor mat 22 so that the upper surface 60 of the grommet is substantially flush with the upper surface 62 of the floor mat 22. As shown in Fig. 6, the throughbore of the grommet has a closed top end such that an upper surface 60 of the grommet 20a does not have an opening to allow fluid, dirt or other debris on the floor mat 22 to enter the throughbore of the grommet and stain or damage the underlying carpet and/or floor of a vehicle. In another embodiment shown in Fig. 8B, grommet 20b is attached to or molded with the floor mat 22 so that the flange 64 and at least a portion of the body 66 of the grommet 20b are integrated within the floor mat 22 by molding or another process. In this embodiment, the grommet 20b is not visible from the top of the floor mat 22, which helps prevent fluid, dirt and other debris from reaching the underlying carpet and/or floor while enhancing the appearance of the floor mat.

In the embodiment of Fig. 8B, an important purpose of the flange 64 is providing an anchor location for engaging the mat core 44, as the floor mat 22 is molded around the grommet 20b. As such, the grommet 30 is preferably made of a plastic material having a higher melting point than the material of the mat 22, such as TPE described above. Thus, the grommet 20b will withstand the injection of molten plastic during the molding process and will retain its structural integrity.

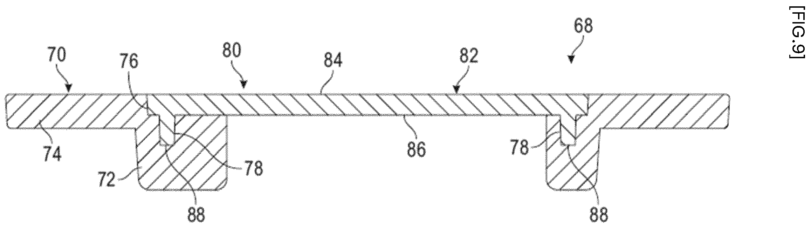

In the above embodiments, the grommet 20 may be integrally formed such as in a molding process. In another embodiment shown in Fig. 9, the grommet 68 has a two-piece construction. In this embodiment, a first body part 70 including a wall 72 and a flange 74 is molded, where the first body part 70 includes a central recessed area 76 and throughholes 78. A second body part 80 includes a cylindrical cover 82 having an upper surface 84 and a bottom surface 86, where a plurality of pins 88 extend from the bottom surface 86. The second body part 80 has an outer diameter that is less than an inner diameter of the recessed area 76 so that the second body part 80 may be seated in the recessed area 76. As the second body part 80 is seated in the recessed area 76 of the first body part 70, the pins 88 are aligned with and inserted into the throughholes 78. The second body part 80 may be secured to the first body part 70 by being press fit together, by being ultrasonically welded together or by using an adhesive.

While a particular embodiment of the present grommet has been described herein, it will be appreciated by those skilled in the art that changes and modifications may be made thereto without departing from the invention in its broader aspects and as set forth in the following claims.

## Claims

1. A floor mat (22) for a vehicle having a floor, the mat comprising:
- a mat body having a core (44), an upper surface (62) and an opposing lower surface;
- a grommet (20) integrally formed with the mat body and contained between said upper surface and said lower surface, said grommet including a body (26) having a wall (48) and a flange (38) extending outwardly from said wall, said wall having an outer surface (32) and an inner surface (34), said inner surface defining a throughbore (36) with a closed top end.

2. Floor mat according claim 1, wherein the flange has a diameter that is greater than a diameter of the wall of the body.

3. Floor mat according to any previous claim, wherein the flange includes a plurality of slots (42).

4. Floor mat according to any previous claim, wherein the wall includes a plurality of spaced blocks (50) on an inner surface (34) of the wall (48), said blocks extending from a top edge (28) to a bottom edge (30) of the body.

5. Floor mat according to claim 4, wherein each of said blocks include an inner guide surface (52).

6. Floor mat according to any previous claim 4 or 5, further comprising a plurality of ribs (54), each of said ribs extending between a different pair of said blocks.

7. Floor mat according to claim 6, wherein each of said ribs includes an inclined surface (56) and a substantially flat upper surface (58).

8. Floor mat according to any previous claim, wherein the wall includes a plurality of spaced blocks (50) on an inner surface of the wall, said blocks extending from a top edge (28) or a bottom edge (30) of the body to a point between said top edge and said bottom edge of said body.

9. Floor mat according to claim 8, wherein each of said blocks include an inner guide surface (52).

10. Floor mat according to any previous claim 8 or 9, further comprising a plurality of ribs (54), each of said ribs extending between a different pair of said blocks.

11. Floor mat according to any previous claim, further comprising an annular rib extending about an entire circumference of said inner surface of said wall.

12. Grommet (20) for a vehicle floor mat, the grommet comprising:
- a body (26) having a wall (48) and a flange (38) extending outwardly from said wall, said wall having an outer surface (32) and an inner surface (34), said inner surface defining a throughbore (36) with a closed top end.

13. Grommet for a vehicle floor mat according to claim 12, wherein the flange has a diameter that is greater than a diameter of the wall of the body.

14. Grommet for a vehicle floor mat according to any previous claim 12 or 13, wherein the flange includes a plurality of slots (42).

15. Grommet for a vehicle floor mat according to any previous claim 12 to 14, wherein the wall includes a plurality of spaced blocks (50) on an inner surface (34) of the wall (48), said blocks extending from a top edge (28) to a bottom edge (30) of the body.

16. Grommet for a vehicle floor mat according to claim 15, further comprising a plurality of ribs (54), each of said ribs extending between a different pair of said blocks.

17. Grommet for a vehicle floor mat according to claim 16, wherein each of said ribs includes an inclined surface (56) and a substantially flat upper surface (58).

18. Grommet for a vehicle floor mat according to any previous claim 12 to 17, wherein the wall includes a plurality of spaced blocks on an inner surface of the wall, said blocks extending from a top edge or a bottom edge of the body to a point between said top edge and said bottom edge of said body.

19. Grommet for a vehicle floor mat according to claim 18, further comprising a plurality of ribs, each of said ribs extending between a different pair of said blocks.

20. Grommet for a vehicle floor mat according to any previous claim 12 to 19, further comprising an annular rib extending about an entire circumference of said inner surface of said wall.
